(19) Europäisches Patentamt

European Patent Office

Office européen des brevets

(11) **EP 0 902 416 B1**

(12) **EUROPÄISCHE PATENTSCHRIFT**

(45) Veröffentlichungstag und Bekanntmachung des Hinweises auf die Patenterteilung:
**02.07.2003  Patentblatt 2003/27**

(51) Int Cl.⁷: **G10L 15/20**

(21) Anmeldenummer: **98114986.7**

(22) Anmeldetag: **11.08.1998**

(54) **Verfahren und Einrichtung zum Erkennen einer Spracheingabe während einer Ansage**

Method and device for recognizing a speech input during an announcement

Procédé et dispositif pour reconnaitre une entrée de parole pendant la diffusion d'une annonce

(84) Benannte Vertragsstaaten:
**DE FR GB IT**

(30) Priorität: **12.09.1997  DE 19740221**

(43) Veröffentlichungstag der Anmeldung:
**17.03.1999  Patentblatt 1999/11**

(73) Patentinhaber: **SIEMENS AKTIENGESELLSCHAFT**
**80333 München (DE)**

(72) Erfinder: **Lucioni, Gonzalo**
**58454 Witten (DE)**

(56) Entgegenhaltungen:
**EP-A- 0 522 725          EP-A- 0 736 995**
**US-A- 4 914 692          US-A- 5 125 024**
**US-A- 5 548 681**

**Beschreibung**

Spracherkennungssysteme ermöglichen es, benutzerfreundliche Dienste über öffentliche Kommunikationsnetze zu realisieren. So kann ein Benutzer eines sprachgesteuerten Ansagesystems über seine Spracheingabe beispielsweise Informationen abfragen, die in dem Ansagesystem gespeichert sind. Ferner kann er Transaktionen, z.B. Geldüberweisungen oder Bestellungen ausführen. Zwischen dem Benutzer und dem Ansagesystem findet dabei eine Mensch-Maschine-Kommunikation statt, die sich für den Benutzer um so bequemer und effektiver gestaltet, je besser sie in ihrem Ablauf einer Mensch-Mensch-Kommunikation angenähert ist. Eine Kommunikation zwischen Menschen zeichnet sich bekanntlich unter anderem dadurch aus, daß der eine Gesprächspartner auf die Information des anderen gezielt antwortet. Darüber hinaus spricht bei einer Mensch-Mensch-Kommunikation in der Regel nur ein Gesprächspartner, so daß der andere das Gesagte registrieren kann.

Bei Informationsdiensten, die von sprachgesteuerten Ansagesystemen angeboten werden, sind die über die Ansage zu vermittelnden Informationen in einer Art Baumstruktur organisiert. Um die gewünschte Information zu erhalten, antwortet der Benutzer mit seiner Spracheingabe auf eine erste Ansage des Ansagesystems. In Abhängigkeit der Spracheingabe des Benutzers wählt das Ansagesystem die nächste Ansage aus einem sogenannten Ansage-Menü aus, das die Baumstruktur der gespeicherten Information wiederspiegelt. Der Benutzer kommuniziert mit gezielten Spracheingaben als Antwort auf die Sprachansagen des Ansage-Menüs solange mit dem Ansagesystem, bis dieses ihm die gewünschte Information liefert. Auf diese Weise kann die Zeit, die benötigt wird, um die gewünschte Information von dem Ansagesystem zu erhalten, vergleichsweise kurz gehalten werden.

Bei bekannten Ansagesystemen stellt es sich jedoch als Nachteil dar, daß der Benutzer bis zum Ende der jeweiligen Ansage warten muß, bis er die Spracheingabe und so die gewünschte Wahl innerhalb des Ansage-Menüs vornehmen darf, da das Ansagesystem mit der Ansage fortfährt, ohne die Spracheingabe des Benutzers zu registrieren. Bei gleichzeitig auftretender Ansage und Spracheingabe, auch "double talking" genannt, geht so ein Teil der von dem Benutzer aufgesprochenen Sprachinformation verloren, so daß die Kommunikation zwischen Benutzer und Ansagesystem gestört ist. Derartige Kommunikationsstörungen treten bei bekannten Ansagesystemen häufig auf. So geht aus einem Feldversuch, wiedergegeben in "A voice-activated telephone exchange system and its field trial", S. Yamamoto, K. Takeda, N. Inone, S. Kuroiwa, M. Naitoh, Proceedings of 2nd IEEE Workshop on Interactive Voice Technology for Telecommunications Applications, Kyoto, Japan 26-27 Sept. 1994, p. 21-26, hervor, daß über 60 % der Benutzer bereits vor dem Ende der Ansage mit dem Sprechen begonnen haben. Um die eben erläuterten Kommunikationsstörungen zu vermeiden, muß ein Ansagesystem in die Lage versetzt werden, ein gleichzeitiges Auftreten von Ansage und Spracheingabe zu erkennen.

Ein weiterer Stand der Technik ist aus der Patentschrift US-A-5548681 bekannt. In dieser Patentschrift wird ein sprachgesteuertes Ansagesystem beschrieben, bei dem eine Spracheingabe eines Benutzers bereits während einer Ansage erfolgen kann.

Es ist Aufgabe der Erfindung, ein Verfahren und eine Einrichtung für ein sprachgesteuertes Ansagesystem anzugeben, das bzw. die es erlaubt, eine Spracheingabe während einer Ansage sicher und schnell zu erkennen.

Die Erfindung löst diese Aufgabe gemäss den Ansprüchen 1-17 durch das Verfahren zum Erkennen einer Sprechpause während einer Ansage, bei dem ein digitales Ansagesignal und ein digitales Spracheingabesignal über eine vorgegebene Mittelungsdauer gemittelt wird. Es werden für Zeitfenster vorbestimmter Länge Signaldifferenzen von gemitteltem Spracheingabesignal und gemitteltem Ansagesignal ermittelt. Die Signaldifferenzen aufeinanderfolgender Zeitfenster werden einem ersten digitalen Filter zugeführt, das unter Berücksichtigung einer ersten Adaptionsfunktion ein

Pulsmaß ermittelt, welches neben einem Basisanteil einen Änderungsanteil an der Signaldifferenz eines Zeitfensters enthält. Die Signaldifferenzen aufeinanderfolgender Zeitfenster werden weiterhin einem zweiten digitalen Filter zugeführt, das unter Berücksichtigung einer zweiten Adaptionsfunktion ein Grundmaß ermittelt, welches im wesentlichen den Basisanteil an der Signaldifferenz eines Zeitfensters wiedergibt. Für das gleichzeitige Auftreten der Ansage und der Spracheingabe wird ein Detektorsignal erzeugt, wenn das Pulsmaß größer als das Grundmaß plus einem vorgegebenem Schwellenwert ist.

Bei dem erfindungsgemäßen Verfahren werden aufeinanderfolgende Zeitfenster dahingehend unterschieden, ob sie sowohl Ansageinformation als auch Spracheingabeinformation enthalten oder nicht. Diese Unterscheidung wird für das aktuell zu verarbeitende Zeitfenster auf der Grundlage des ermittelten Pulsmaßes und des ermittelten Hintergrundmaßes getroffen. Die Zeitfenster bestimmen die zeitliche Auflösung, mit der ein gleichzeitiges Auftreten von Ansage und Spracheingabe erfaßt werden kann. Die Länge der Zeitfenster kann gleich der Mittelungsdauer sein. Dies kann beispielsweise bei der Verarbeitung codierter Daten vorteilhaft sein, wenn diese in Zeitrahmen vorgegebener Länge vorliegen. Der Ermittlung des Pulsmaßes und des Hintergrundmaßes liegt die Bestimmung der Signaldifferenz von gemitteltem Spracheingabesignal und gemitteltem Ansagesignal zugrunde. Die Signaldifferenz ist in ihrem zeitlichen Verlauf zu den Zeiten durch Maximalwerte, d.h. durch Pulse gekennzeichnet, zu denen die Ansage und die Spracheingabe gleichzeitig auftreten. Während der zeitliche Verlauf des Pulsmaßes im wesentlichen das zeitliche Verhalten der Signaldifferenz wiederspiegelt, wird der zeitliche Verlauf des Grundmaßes im wesentlichen allein von der Ansage bestimmt. Der Vergleich des Pulsmaßes mit dem Grundmaß für ein vorgegebenes Zeitfenster erlaubt es mithin, Zeitbereiche, in denen die Ansage und die Spracheingabe zugleich auftreten, von Zeitbereichen zu unterscheiden, in denen allein die Ansage erfolgt. Die synchrone Ermittlung von Pulsmaß und Hintergrundmaß des aktuellen Zeitrahmens wird durch die Berücksichtigung der ersten und der zweiten Adaptionsfunktion ermöglicht. Da für jedes einzelne Zeitfenster das Pulsmaß mit dem Hintergrundmaß plus dem vorgegebenen Schwellenwert verglichen und das Auswertesignal erzeugt wird, kann ein gleichzeitiges Auftreten von Ansage und Spracheingabe schnell und zuverlässig ermittelt werden.

Das erfindungsgemäße Verfahren ist nicht auf die Verwendung in einem sprachgesteuerten Ansagesystem beschränkt, sondern kann für jedes System angewendet werden, bei dem ein gleichzeitiges Auftreten von zwei Sprachsignalen zu erfassen ist. Beispielsweise kann es bei Freisprechtelefonen zur Ansteuerung von Echounterdrückungseinheiten eingesetzt werden, bei denen "double talking" in bekannter Weise auf der Basis von Lautstärkevergleichen der Nah- und Fernsprecher ermittelt wird.

Eine vorteilhafte Weiterbildung der Erfindung besteht darin, daß die Absolutwerte des Ansagesignals des Spracheingabesignals gemittelt werden. Anstelle der Absolutwerte können auch die Quadrate der Werte des Ansagesignals und des Spracheingabesignals gemittelt werden. Vorteilhaft wird als Signaldifferenz die Differenz des Logarithmus des gemittelten Spracheingabesignals und des Logarithmus des gemittelten Ansagesignals verwendet. Bei der Verarbeitung von Sprache hat es sich als vorteilhaft herausgestellt, logarithmierte Signale zu verwenden, die dem dynamischen Bereich der den Sprachsignalen zugrundeliegenden Daten, gut angepaßt sind. Ferner kann durch die Verwendung des Logarithmus die Bildung des Quotienten aus gemitteltem Spracheingabesignal zu gemitteltem Ansagesignal durch eine Differenzbildung ersetzt werden, die bei einer schaltungstechnischen Realisierung des Verfahrens unter Verwendung von anwendungsspezifischen integrierten Schaltkreisen, sogenannten ASIC-Bausteinen, leichter als die Quotientenbildung umzusetzen ist.

Eine weitere vorteilhafte Ausgestaltung der Erfindung besteht darin, daß die Signaldifferenz, welche durch das erste digitale Filter verarbeitet wird, einem ersten und einem zweiten Verarbeitungszweig des ersten digitalen Filters zugeführt wird, daß der Verarbeitungszweig in Reihe geschaltet ein erstes Additionsglied, ein Multiplikationsglied und ein zweites Additionsglied hat, welches das Pulsmaß ausgibt, daß das Pulsmaß mit einer Verzögerung mindestens der Dauer eines Zeitfensters zurückgeführt und beim zweiten Additionsglied addiert und beim ersten Additionsglied subtrahiert wird, daß der zweite Verarbeitungszweig in Reihe geschaltet ein Additionsglied und eine Adaptionsglied hat, daß am Additionsglied das verzögerte Pulsmaß subtrahiert und als Ergebnis eine erste Hilfsgröße ermittelt wird, daß in dem Adaptionsglied aus der ersten Hilfsgröße eine erste Adaptionsgröße gemäß der vorgegebenen ersten Adaptionsfunktion ermittelt wird und daß diese Adaptionsgröße im ersten Verarbeitungszweig am Multiplikationsglied als Multiplikator verwendet wird.

Die erste Hilfsgröße entspricht der Änderung der Pulsmaße aufeinanderfolgender Zeitfenster, d.h. sie gibt ein Maß an für die kurzzeitigen Schwankungen der Signaldifferenz. In Abhängigkeit der ersten Hilfsgröße wird im zweiten Verarbeitungszweig die erste Adaptionsgröße ermittelt, die wiederum in dem ersten Verarbeitungszweig zur Bestimmung des Pulsmaßes des aktuellen Zeitfensters benutzt wird. Die Einschwingzeit des ersten digitalen Filters ist auf die Dauer eines Zeitfensters beschränkt, so daß das Pulsmaß nach dem Einschalten ohne wesentliche Verzögerung ermittelt werden kann.

Vorteilhaft wird das Verfahren dadurch weitergebildet, daß die Signaldifferenz, welche durch das zweite digitale Filter verarbeitet wird, einem ersten und einem zweiten Verarbeitungszweig des zweiten digitalen Filters zugeführt wird, daß der erste Verarbeitungszweig in Reihe geschaltet ein erstes Additionsglied, ein Multiplikationsglied, ein zweites Additionsglied und ein drittes Additionsglied, welches das Grundmaß plus dem vorgegebenen Schwellenwert ausgibt, daß das Grundmaß mit einer Verzögerung mindestens der Dauer eines Zeitfensters zurückgeführt und beim zweiten Additionsglied addiert und beim ersten Additionsglied subtrahiert wird, daß der zweite Verarbeitungszweig in Reihe geschaltet ein Additionsglied und ein Adaptionsglied hat, daß am Additionsglied das verzögerte Grundmaß subtrahiert und als Ergebnis eine zweite Hilfsgröße ermittelt wird, daß in dem Adaptionsglied aus der zweiten Hilfsgröße eine zweite Adaptionsgröße gemäß der vorgegebenen zweiten Adaptionsfunktion ermittelt wird und daß diese Adaptionsgröße im ersten Verarbeitungszweig am Multiplikationsglied als Multiplikator verwendet wird. Bei der beschriebenen Weiterbildung kann demnach zum Ermitteln des Hintergrundmaßes ein zweites digitales Filter verwendet werden, das sich von dem ersten digitalen Filter nur dadurch unterscheidet, daß es unter Berücksichtigung der zweiten Adaptionsfunktion die zweite Adaptionsgrundgröße bestimmt. Bei dem Verfahren können also im wesentlichen baugleiche digitale Filter verwendet werden, so daß der schaltungstechnische Aufwand verglichen mit bekannten Verfahren relativ gering ist.

Vorteilhaft liegt der Schwellenwert zwischen 6dB und 10dB. Wird das Hintergrundmaß des aktuellen Zeitfensters bei einem Vergleich mit dem Pulsmaß um diesen Schwellenwert vergrößert, so wird die Zuverlässigkeit erhöht, mit der ein gleichzeitiges Auftreten von Ansage und Spracheingabe ermittelt werden kann.

Weitere vorteilhafte Weiterbildungen der Erfindung sind Gegenstand der Unteransprüche sowie der folgenden Beschreibung.

Die Erfindung wird im folgenden an Hand der Figuren näher erläutert. Darin zeigen:

Fig. 1 ein Blockdiagramm eines sprachgesteuerten Ansage-systems,

Fig. 2 ein Blockdiagramm einer Detektoreinrichtung zum Erkennen gleichzeitig auftretender Ansage und Spracheingabe,

Fig. 3 eine Schaltungsanordnung eines digitalen Pulsfilters der Detektoreinrichtung nach Fig. 2,

Fig. 4 eine erste Adaptionsfunktion, die in dem Pulsfilter nach Fig. 3 berücksichtigt wird,

Fig. 5 eine Schaltungsanordnung eines digitalen Grundfilters der Detektoreinrichtung nach Fig. 2,

Fig. 6 eine zweite Adaptionsfunktion, die in dem Grundfilter nach Fig. 5 berücksichtigt wird,

Fig. 7 den zeitlichen Verlauf eines Ansagesignals,

Fig. 8 den zeitlichen Verlauf eines Spracheingabesignals,

Fig. 9 eine Impulsantwort eines Echopfades für das Beispiel nach Fig. 7 und 8,

Fig. 10 den zeitlichen Verlauf der Signaldifferenz von mittlerem Ansageenergiegehalt und mittlerem Spracheingabeenergiegehalt für das Beispiel nach Fig. 7 und 8,

Fig. 11 den zeitlichen Verlauf von Pulsmaß und Grundmaß für das Beispiel nach Fig. 7 und 8, und

Fig. 12 den zeitlichen Verlauf eines Detektorsignals für das Beispiel nach Fig. 7 und 8.

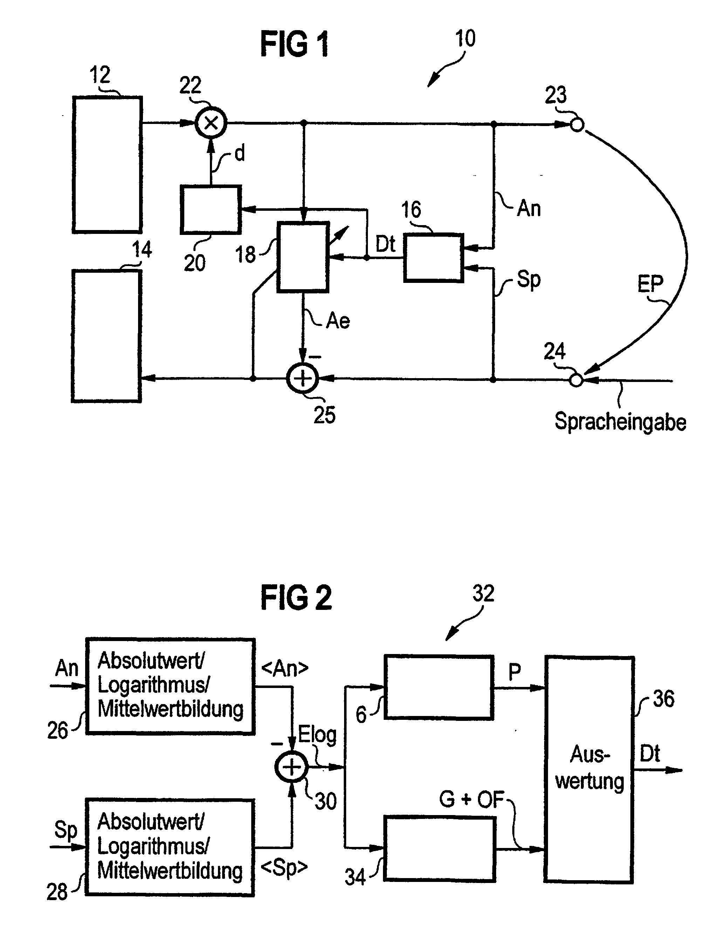

In Fig. 1 ist ein sprachgesteuertes Ansagesystem 10 dargestellt, das es dem Benutzer ermöglicht, eine Spracheingabe während einer Ansage vorzunehmen. Das Ansagesystem 10 enthält neben einer Ansageeinrichtung 12 und einer Spracherkennungseinrichtung 14 als funktionswesentliche Komponenten eine Detektoreinrichtung 16, eine Echounterdrückungseinrichtung 18 und eine Dämpfungsvorrichtung 20. Das Ansagesystem 10 enthält weiterhin ein Multiplikationsglied 22, dessen Eingänge mit der Ansageeinrichtung 12 und der Dämpfungsvorrichtung 20 verbunden sind und dessen Ausgang die Echounterdrückungseinrichtung 18 und die Detektoreinrichtung 16 ansteuert. Ferner führt der Ausgang des Multiplikationsgliedes 22 auf einen Ausgang 23 des Ansagesystems 10, über den die Ansage dem Benutzer zugeführt wird.

Der Ansage liegt ein digitales Ansagesignal An zugrunde, das in bekannter Weise durch einen D-A-Wandler (nicht dargestellt) in ein analoges und dann für den Benutzer hörbares Signal gewandelt wird. Ebenso wird aus einer Spracheingabe des Benutzers durch A-D-Wandlung eines der Spracheingabe entsprechenden analogen Signals ein digitales Spracheingabesignal Sp erzeugt, das dem Ansagesystem 10 über einen Eingang 24 zugeführt wird. Das Ansagesignal An und das Spracheingabesignal Sp werden der Detektoreinheit 16 zugeführt, die in noch zu beschreibender Weise ein gleichzeitiges Auftreten von Ansage und Spracheingabe feststellt. Bei gleichzeitiger Ansage und Spracheingabe gibt die Detektoreinrichtung 16 ein Detektorsignal Dt mit dem Logikwert 1 aus, während für den Fall, daß sich Ansage und Spracheingabe zeitlich nicht überlagern, das Detektorsignal Dt den Logikwert 0 annimmt. Über das Detektorsignal Dt werden die Echounterdrückungseinrichtung 18 und die Dämpfungsvorrichtung 20 angesteuert.

Durch die Dämpfungsvorrichtung 20 kann die Lautstärke der Ansage variiert werden. Wird innerhalb der Detektoreinrichtung 16 ein gleichzeitiges Auftreten von Spracheingabe und Ansage erfaßt, so wird die Dämpfungsvorrichtung 20 mit dem Logikwert 1 des Detektorsignals Dt angesteuert. In diesem Fall wird in der Dämpfungsvorrichtung 20 ein Dämpfungsfaktor d auf einen Sollwert eingestellt, der eine mittlere Dämpfung der Ansage von beispielsweise 12 dB bewirkt, indem er dem Multiplikationsglied 22 zugeführt wird und dieses das aus der Ansageeinrichtung 12 stammende Ansagesignal An entsprechend dem Dämpfungsfaktor d verringert. Zudem wird in der Dämpfungsvorrichtung 20 ein Zähler (nicht dargestellt) gestartet, der bei Erreichen eines vorgegebenen Zählwertes die Dämpfungsvorrichtung 20 veranlaßt, den Dämpfungsfaktor d zu erhöhen und damit die Lautstärke der Ansage weiter zu verringern.

Die Lautstärke der Ansage wird durch die Dämpfungsvorrichtung 20 stufenweise variiert, da der Dämpfungsfaktor d erst dann auf einen anderen Wert eingestellt wird, wenn der Zähler innerhalb der Dämpfungsvorrichtung 20 den vorgegebenen Zählwert erreicht hat. Dieses stufenweise Variieren der Lautstärke der Ansage An kann Störgeräusche, z.B. Knackgeräusche hervorrufen. Die einzustellenden Sollwerte des Dämpfungsfaktors d werden deshalb innerhalb der Dämpfungsvorrichtung 20 mittels digitaler Tiefpässe in bekannter Weise gefiltert, so daß sich anstelle der stufenförmigen Sollwert-Vorgabe eine "glatte" Sollwert-Funktion ergibt, die durch geeignete Übergangszeiten der jeweiligen Übergänge zwischen zwei aufeinanderfolgenden Sollwerten des Dämpfungsfaktors d gekennzeichnet ist.

Die Echounterdrückungseinrichtung 18 hat die Aufgabe, die Spracheingabe von einem Ansageecho zu befreien. Dieses wird dadurch erzeugt, daß die Ansage über einen in Fig. 1 mit EP bezeichneten Echopfad vom Ausgang 23 zum Eingang 24 des Ansagesystems 10 übertragen wird und dort in das zu verarbeitenden Spracheingabesignal Sp eingeht. Um das Ansageecho aus dem Spracheingabesignal Sp zu entfernen, werden die Übertragungseigenschaften des Echopfades EP, d. h. seine Übertragungsfunktion, von der Echounterdrükkungseinrichtung 18 in einem schnell konvergierenden Adaptionsverfahren nachgebildet. Die Echounterdrükkungseinrichtung 18 wird durch das Detektorsignal Dt angesteuert und erzeugt aus dem Ansagesignal An, das ihm durch das Multiplikationsglied 22 zugeführt wird, ein dem Ansageecho nachgebildetes Echosignal Ae, das an dem Additionsglied 25 von dem Sprachsignal Sp abgezogen wird. Der Spracherkennungseinrichtung 14 steht so ein digitales Signal der von dem Ansageecho befreiten Spracheingabe zur Verfügung. In der Spracherkennungseinrichtung 14 kann in bekannter Weise der relevante Nachrichteninhalt aus der Spracheingabe gewonnen werden.

In Fig. 2 ist ein Blockdiagramm der Detektoreinrichtung 16 dargestellt. Die Detektoreinrichtung 16 enthält parallel geschaltet ein Ansagemittelungsglied 26 und ein Eingabemittelungsglied 28. Diese Komponenten sind mit einem Additionsglied 30 verknüpft, dem parallel angeordnet ein digitales Pulsfilter 32 und ein digitales Grundfilter 34 nachfolgen. Das Pulsfilter 32 und das Grundfilter 34 sind mit einer Auswerteeinheit 36 verbunden.

Im folgenden soll die Erfindung an einem Beispiel erläutert werden, bei dem das Ansagesignal An und das Spracheingabesignal Sp jeweils eine Folge von Abtastwerten sind, die durch Abtasten der entsprechenden analogen Signale mit einer Abtastrate von 8 kHz erzeugt sind. Das Ansagemittelungsglied 26 ermittelt aus dem Ansagesignal An einen mittleren Energieinhalt <An>, indem für eine geeignete Anzahl von Abtastwerten des Ansagesignals An eine Absolutwertbildung, Logarithmierung und Mittelwertbildung durchgeführt wird. Die Anzahl der Abtastwerte ist für dieses Beispiel mit 80 angesetzt, so daß das Ansagesignal An in diesem Beispiel über eine Mittelungsdauer von 10 ms gemittelt wird. Die Mittelwertbildung kann z.B. in bekannter Weise durch Tiefpaßfilterung erfolgen. Ein so erfaßter mittlerer Energiegehalt <An> des Ansagesignals An wird dem Additionsglied 30 zugeführt. In analoger Weise wird in dem Eingabemittelungsglied 28 durch Absolutwertbildung, Logarithmierung und Mittelwertbildung über die vorgegebene Mittelungsdauer ein mittlerer Energiegehalt <Sp> des Spracheingabesignals Sp erzeugt. Auch dieses Signal <Sp> wird dem Additionsglied 30 zugeführt. Dieses berechnet für Zeitfenster vorbestimmter Länge, z.B. 125 ns, die Differenzen aus dem mittleren Energiegehalt <Sp> des Spracheingabesignals Sp und dem mittleren Energiegehalt <An> des Ansagesignals An. Diese Differenz ist in Fig. 2 mit Elog bezeichnet. Das Additionsglied 30 gibt die Differenz Elog des aktuell zu verarbeitenden Zeitfensters an das digitale Pulsfilter 32 und das digitale Grundfilter 34 ab. Das Pulsfilter 32 bzw. das Grundfilter 34 erzeugen in noch zu beschreibender Weise aus der Differenz Elog ein Pulsmaß P bzw. ein Grundmaß G, die der Auswerteeinheit 36 zugeführt werden. In der Auswerteeinheit 36 wird das Pulsmaß P mit dem Grundmaß G plus einem vorgegebenen Schwellenwert OF verglichen. Ist das Pulsmaß P größer als das um den Schwellenwert OF vergrößerte Grundmaß G, so gibt die Auswerteeinheit 36 das Auswertesignal Dt mit dem Logikwert 1 ab, das das gleichzeitige Auftreten von Ansageund Spracheingabe anzeigt.

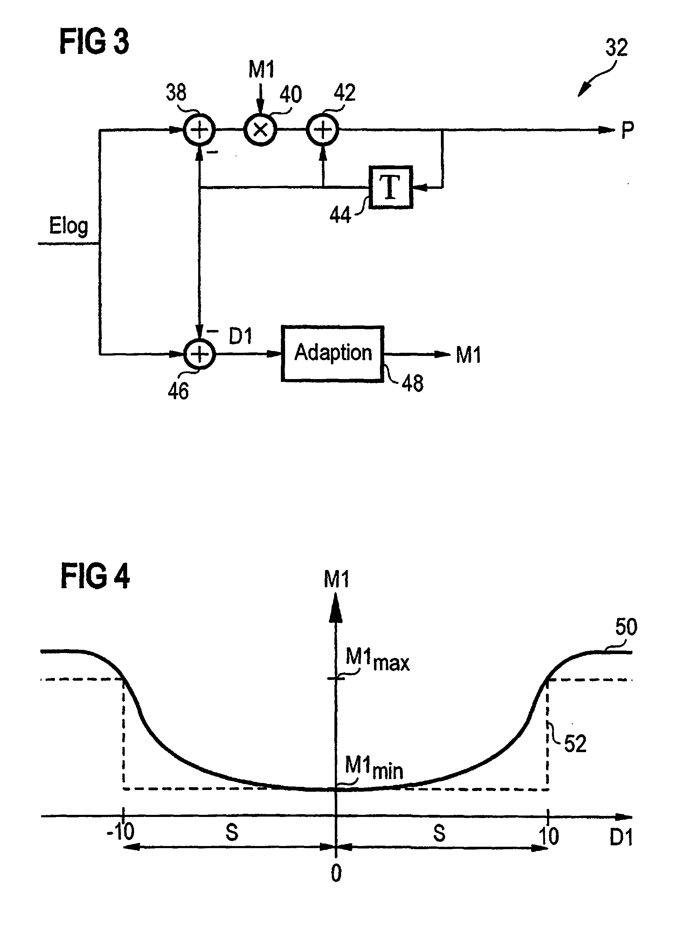

In Fig. 3 ist das digitale Pulsfilter 32 dargestellt, das aus der Differenz Elog des aktuellen Zeitfensters das Pulsmaß P erzeugt. Das Pulsfilter 32 enthält zwei Verarbeitungszweige. Im ersten Verarbeitungszweig sind in Reihe geschaltet ein erstes Additionsglied 38, ein Multiplikationsglied 40 und ein zweites Additionsglied 42 enthalten. Dem zweiten Additionsglied 42 schließt sich ein Verzögerungsglied 44 an, dessen Ausgang mit dem Eingang des ersten Additionsgliedes 38 verbunden ist. Das Verzögerungsglied 44 erzeugt eine Signalverzögerung T, die der Länge eines Zeitfensters entspricht. In dem vorliegenden Beispiel arbeiten die digitalen Filter mit einer Taktfrequenz von 8 kHz, so daß die Signalverzögerung T und damit die Länge eines Zeitfensters mit 125 ns angesetzt ist. In dem zweiten Verarbeitungszweig sind ein Additionsglied 46 und ein Adaptionsglied 48 in Reihe geschaltet. Der Eingang des Additionsgliedes 46 ist zudem mit dem Ausgang des Verzögerungsgliedes 44 verbunden.

Zur Erläuterung der Funktionsweise des Pulsfilters 32 ist Fig. 4 heranzuziehen, in der eine wannenförmige, zur Null-Achse symmetrische Kennlinie 50 (durchgezogene Linie) dargestellt ist, die eine erste Adaptionsfunktion charakterisiert. Die Adaptionsfunktion nach Fig. 4 gibt den Zusammenhang zwischen einer ersten Hilfsgröße D1 und einer ersten Adaptionsgröße M1 an, die in dem ersten Verarbeitungszweig des Pulsfilters 32 zur Ermittlung des Pulsmaßes P verwendet wird. Wie der Fig. 3 zu entnehmen ist, wird die erste Hilfsgröße D1 gebildet, indem an dem Additionsglied 28 das um T verzögerte Pulsmaß P, d.h. das Pulsmaß P des dem aktuellen Zeitfenster vorhergehenden Zeitfensters, von der Differenz Elog des aktuellen Zeitfensters subtrahiert wird. Bezeichnet man das aktuell zu verarbeitenden Zeitfenster mit n und das vorhergehende, d.h. eine Signalverzögerung T zuvor verarbeitete Zeitfenster, mit n-1, so kann D1 geschrieben werden als

$$(1) \qquad D1(n) = Elog(n) - P(n-1).$$

Die Hilfsgröße D1 gibt ein Maß an für die Änderung der Pulsmaße P zweier aufeinanderfolgender Zeitfenster. Aus der Hilfsgröße D1 nach der Beziehung (1) erzeugt das Adaptionsglied 48 entsprechend der Kennlinie 50 nach Fig. 4 die Adaptionsgröße M1, die dem Multiplikationsglied 40 zugeführt wird. Im ersten Verarbeitungszweig wird am Additionsglied 38 das Pulsmaß P(n-1) des zuletzt verarbeiteten Zeitfensters n-1 von der Differenz Elog(n) des aktuellen Zeitfensters n subtrahiert. Das Ergebnis dieser Subtraktion wird am Multiplikationsglied 40 mit der Adaptionsgröße M1 multipliziert. An dem Additionsglied 42 werden schließlich das Ergebnis der am Multiplikationsglied 40 durchgeführten Multiplikation und das Pulsmaß P(n-1) des zuletzt verarbeiteten Zeitfensters n-1 addiert und das Pulsmaß P(n) des aktuellen Zeitfensters n ausgegeben. Dieses Pulsmaß P(n) ist durch Gleichung (2) gegeben:

$$(2) \qquad P(n) = (1-M1) \cdot P(n-1) + M1 \cdot Elog(n).$$

Das Pulsmaß P(n) des aktuell zu verarbeitenden Zeitfensters n ist die Summe zweier komplementär zueinander gewichteter Anteile. Die Gewichtung der beiden Anteile erfolgt über die Adaptionsgröße M1, die im allgemeinen Werte zwischen 0 und 1 annehmen kann. Für kleine Werte von M1 dominiert der erste Anteil $(1-M1) \cdot P(n-1)$ in Gleichung (2), so daß das Pulsmaß P(n) des aktuellen Zeitfensters n vor allem durch das Pulsmaß P(n-1) des vorhergehenden Zeitfensters n-1 gegeben ist. Dagegen dominiert für große Werte von M1 der zweite Anteil $M1 \cdot Elog(n)$, so daß das Pulsmaß P(n) des aktuellen Zeitfensters n im wesentlichen durch die Differenz Elog(n) des aktuellen Zeitfensters n gegeben ist. Die Adaptionsgröße M1 regelt somit die Gewichtung, mit der sich das Pulsmaß P(n) des aktuellen Zeitfensters n aus dem vorhergehenden Pulsmaß P(n-1) und der aktuellen Differenz Elog(n) zusammensetzt.

Wie sich aus Gleichung (2) in Verbindung mit Fig. 4 ergibt, bleibt für betragsmäßig kleine Werte von D1 das Pulsmaß P(n) des aktuellen Zeitfensters n gegenüber dem Pulsmaß P(n-1) des vorhergehenden Rahmens n-1 nahezu unverändert, da die erste Adaptionsfunktion in diesem Wertebereich von D1 kleine Werte nahe 0 annimmt. Dies führt bei geringen Schwankungen der Differenz Elog zu einer Glättung des zeitlichen Verlaufs des Pulsmaßes P, da sich die Werte von P nach Gleichung (2) bei betragsmäßig kleinen Werten von D1 nur wenig verändern. Für betragsmäßig große Werte von D1 nimmt der Wert der Adaptionsgröße M1 zu, so daß der Beitrag der Differenz Elog(n) des aktuellen Zeitfensters n größer wird und das Pulsmaß P(n) des aktuellen Zeitfensters n der Differenz Elog folgt. Die Wirkung des digitalen Pulsfilters 32 nach Fig. 3 liegt demnach darin, daß starke Pulse im zeitlichen Verlauf der Differenz Elog erfaßt werden, während geringe Schwankungen von Elog geglättet werden.

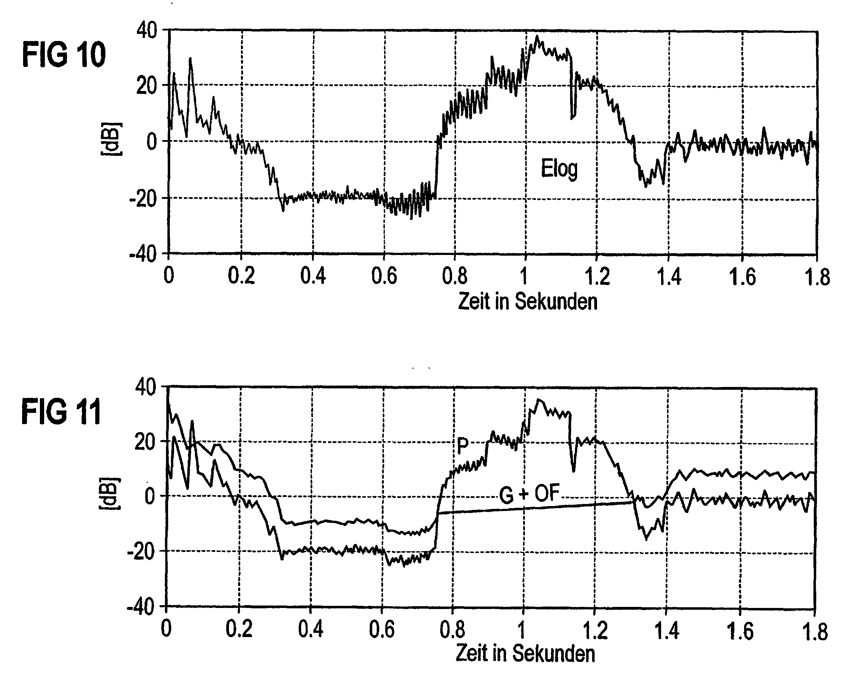

Die erste Adaptionsfunktion mit der Kennlinie 50 nach Fig. 4 kann durch eine Rechteckfunktion angenähert werden, die für Betragswerte von D1 kleiner als ein vorgegebener Amplitudenwert s einen Minimalwert $M1_{min}$ und für Betragswerte von D1 größer gleich dem vorgegebenen Amplitudenwert s einen Maximalwert $M1_{max}$ annimmt. Für das später erläuterte Beispiel ist der vorgegebene Amplitudenwert s gleich 10, der Minimalwert $M1_{min}$ gleich 1/32 und der Maximalwert $M1_{max}$ gleich 1/2. Die Rechteckfunktion ist in Fig. 4 durch eine rechteckige Kennlinie 52 (gestrichelte Linie) dargestellt. Der Anschaulichkeit wegen ist in Fig. 4 der Minimalwert $M1_{min}$ übertrieben groß dargestellt. Der Amplitudenwert s ist so eingestellt, daß das Pulsmaß P von geringfügigen Schwankungen der Differenz Elog im wesentlichen unbeeinflußt bleibt, sich jedoch starke Pulse von Elog im zeitlichen Verlauf von P wiederspiegeln, was später an Hand der Figuren 10 und 11 illustriert wird.

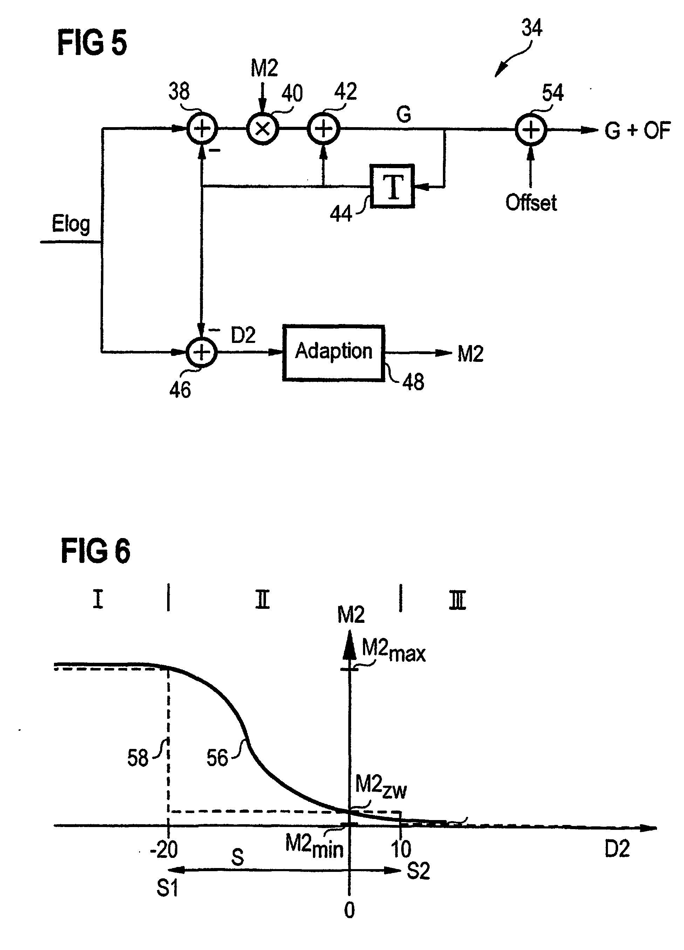

In Fig. 5 ist das digitale Grundfilter 34 dargestellt, das aus der Differenz Elog(n) des aktuellen Zeitfensters n das Grundmaß G erzeugt. Das Grundfilter 34 ist im wesentlichen ebenso aufgebaut, wie das Pulsf ter 14, so daß auf eine detaillierte Beschreibung seines Aufbaus an dieser Stelle verzichtet werden kann. Die Komponenten des Grundfilters 34, die mit den Komponenten des Pulsfilters 32 nach Fig. 2 übereinstimmen, sind in Fig. 5 mit den Bezugszeichen der Komponenten des Pulsfilters 32 versehen. Das digitale Grundfilter 34 enthält zusätzlich ein weiteres Additionsglied 54, das am Ausgang des ersten Verarbeitungszweiges angeordnet ist. An dem Additionsglied 54 werden das von dem Additionsglied 42 ausgegebene Grundmaß G und ein vorgegebener Schwellenwert OF addiert und das Ergebnis dieser Addition ausgegeben. Die Addition des Schwellenwertes OF sorgt für einen Sicherheitsabstand des Grundmaßes G gegenüber dem Pulsmaß P. Der Schwellenwert OF wird so eingestellt, daß der Sicherheitsabstand etwa 6 dB bis 10 dB beträgt.

Das Grundfilter 34 unterscheidet sich von dem Pulsfilter 32 ferner darin, daß in dem Adaptionsglied 48 eine von der ersten Adaptionsgröße M1 verschiedene zweite Adaptionsgröße M2 ermittelt wird, die dem Multiplikationsglied 40 zugeführt wird. Der Ermittlung der zweiten Adaptionsgröße M2 liegt eine zweite Adaptionsfunktion zugrunde, deren Kennlinie 56 in Fig. 6 durchgezogen dargestellt ist. Die zweite Adaptionsgröße M2 wird in Abhängigkeit einer zweiten Hilfsgröße D2 ermittelt, die dadurch erzeugt wird, daß an dem Additionsglied 46 des Grundfilters 34 das um T verzögerte Grundmaß G(n-1) von der Differenz Elog(n) des aktuellen Zeitfensters n subtrahiert wird. D2 kann geschrieben werden als

$$(3) \qquad D2(n) = Elog(n) - G(n-1).$$

Wie der Fig. 6 zu entnehmen ist, fällt die Kennlinie 56 innerhalb eines Übergangsbereiches II, der überwiegend negative Werte von D2 enthält, von einem höheren Niveau auf ein niedrigeres Niveau nahe 0. Die entsprechend der Kennlinie 56 ermittelte zweite Adaptionsgröße M2 wird in dem ersten Verarbeitungszweig zur Berechnung des Grundmaßes G(n) des aktuellen Zeitfensters n verwendet. Am Additionsglied 38 wird das Grundmaß G(n-1) des zuletzt verarbeiteten Zeitfensters n-1 von der Differenz Elog(n) des aktuellen Zeitfensters n subtrahiert und das Ergebnis dieser Subtraktion am Multiplikationsglied 40 mit der zweiten Adaptionsgröße M2 multipliziert. An dem Additionsglied 42 wird das Ergebnis dieser Multiplikation und das Grundmaß G(n-1) des zuletzt verarbeiteten Zeitfensters n-1 addiert. Schließlich wird an dem Additionsglied 54 das von dem Additionsglied 42 gelieferte Grundmaß G(n) und der Schwellenwert OF addiert und als Ergebnis ausgegeben. Das Grundmaß G(n) ist durch Gleichung (4) gegeben:

$$(4) \qquad G(n) = (1-M2) \cdot G(n-1) + M2 \cdot Elog(n).$$

Zum Grundmaß G(n) tragen zwei Anteile bei, die durch die Adaptionsgröße M2 komplementär zueinander gewichtet sind. M2 kann im allgemeinen Werte zwischen 0 und 1 annehmen. Je größer M2 ist, desto weniger trägt der durch das Grundmaß G(n-1) des vorhergehenden Zeitfensters n-1 gegebene Anteil (1-M2) $\cdot$G(n-1) zum Grundmaß G(n) des aktuellen Zeitfensters n bei. Umgekehrt wird mit abnehmendem M2 der Beitrag M2$\cdot$Elog(n) verringert. So ist nach Gleichung (4) in Verbindung mit Fig. 6 das Grundmaß G(n) für positive Werte von D2 (Bereich III) im wesentlichen durch das Grundmaß G(n-1) des vorhergehenden Zeitfensters n-1 gegeben, da M2 für positive Werte von D2 Werte nahe 0 annimmt. Das Grundmaß G bleibt also bei einem plötzlichen Anstieg der Differenz Elog, d.h. bei einem Einsetzen der Spracheingabe während der Ansage, im wesentlichen unverändert. Für negative Werte von D2, d.h. für größere Werte von M2, trägt die Differenz Elog(n) des aktuellen Zeitfensters n zum Pulsmaß G(n) bei. Dieser Wertebereich von D2 ist in Fig. 6 mit I bezeichnet. I kennzeichnet nach Gleichung (3) einen Bereich, in dem die Differenz Elog(n) gegenüber dem Grundmaß G(n-1) deutlich abfällt. Dies ist der Fall, sobald die Spracheingabe während der Ansage beendet wird.

Die zweite Adaptionsfunktion kann durch eine Stufenfunktion angenähert sein. In Fig. 6 ist als Annäherung an die durch die Kennlinie 56 charakterisierte zweite Adaptionsfunktion eine stufenförmige Kennlinie 58 gestrichelt dargestellt. Die Adaptionsgröße M2 nimmt entsprechend der Kennlinie 58 in dem Bereich I, der durch Werte von D2 kleiner einem vorgegebenen negativen Wert S1 gegeben ist, einen maximalen Wert M2$_{max}$, in dem Bereich II, der durch Werte von D2 größer gleich dem vorgegebenen negativen Wert S1 und kleiner gleich einem vorgegebenen positiven Wert S2 gegeben ist, einen Zwischenwert M2$_{zw}$ und in dem Bereich III, der durch Werte von D2 größer dem vorgegebenen positiven Wert S2 gegeben ist, einen minimalen Wert M2$_{min}$ an. Für das im folgenden erläuterte Beispiel wird die zweite Adaptionsgröße M2 entsprechend der Kennlinie 58 bestimmt. Die Kennlinie 58 ist durch S1 gleich -20, S2 gleich 10, M2$_{max}$ gleich 1/16, M2$_{zw}$ gleich 1/128 und M2$_{min}$ gleich 1/32768 charakterisiert.

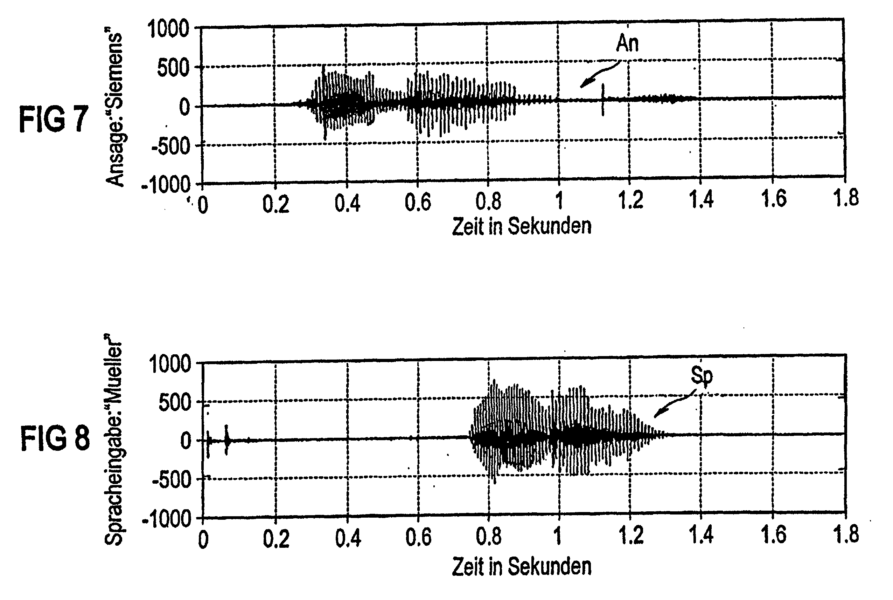

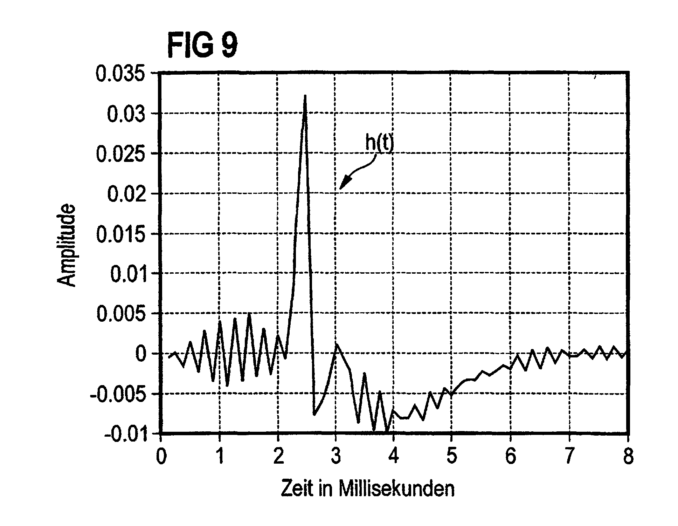

Die eben erläuterte Funktionsweise der Detektoreinrichtung 16 wird im folgenden an Hand der Fig. 7 bis 12 am Beispiel einer konkreten Ansage und einer konkreten Spracheingabe illustriert. Die Spracheingabe ist dabei der Ansage zeitlich teilweise überlagert. In Fig. 7 ist der zeitliche Verlauf des Ansagesignals An, das einer Ansage "Siemens" entspricht, in einem Zeitbereich von 0 bis 1,8 s dargestellt. In demselben Zeitbereich ist in Fig. 8 das Sprachsignal Sp gezeigt, das durch A-D-Wandlung einer Spracheingabe "Mueller" gewonnen worden ist. Wie den Fig. 7 und 8 zu entnehmen ist, liegt eine teilweise zeitliche Überlagerung des Ansagesignals An und des Spracheingabesignals Sp vor. Der Echopfad EP (vgl. Fig. 1) ist in diesem Beispiel durch eine über den gesamten Frequenzbereich weitgehend konstante Dämpfung von ca. 24 dB charakterisiert, so daß die Ansage mit dieser Dämpfung über den Echopfad EP vom Ausgang 23 auf den Eingang 24 des Ansagesystems 10 übertragen wird und dort als Ansageecho in das Spracheingabesignal Sp eingeht. Die weitgehend frequenzunabhängige Dämpfung und damit die entsprechende, über den Frequenzbereich konstante Übertragungsfunktion des Echopfades EP spiegelt sich in einer zeitlich eng begrenzten Impulsantwort h(t) wieder, die in Fig. 9 dargestellt ist.

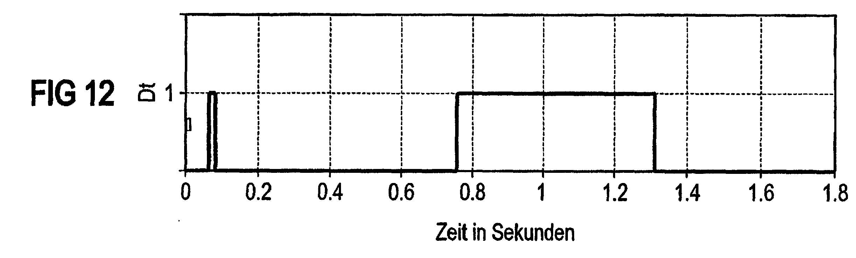

Aus dem Ansagesignal An und dem Spracheingabesignal Sp wird nach Absolutwertbildung, Logarithmierung und Mittelwertbildung die Signaldifferenz Elog gebildet, deren zeitlicher Verlauf in Fig. 10 dargestellt ist. Wie ein Vergleich der Fig. 10 mit den Fig. 7 und 8 zeigt, nimmt die Signaldifferenz Elog zu den Zeiten große Werte an, zu denen sich das Ansagesignal An und das Spracheingabesignal Sp überlagern. Tritt das Ansagesignal An dagegen allein auf, so ist der zeitliche Verlauf der Signaldifferenz Elog weitgehend konstant. Die digitalen Filter 32 und 34 erzeugen aus der Signaldifferenz Elog in oben beschriebener Weise das Pulsmaß P und das Grundmaß G plus dem vorgegebenen Schwellenwert OF, deren zeitlicher Verlauf in Fig. 11 gezeigt ist. Zu den Zeiten, zu denen die Ansage allein auftritt, liegt das um den Schwellenwert OF vergrößerte Grundmaß, also G+OF, deutlich oberhalb des Pulsmaßes P, da in diesem Beispiel der Schwellenwert OF auf etwa 10 dB eingestellt ist. Für eine Ansage ohne gleichzeitige Spracheingabe wird das Detektorsignal Dt mit dem Logikwert 0 ausgegeben, wie in Fig. 12 dargestellt ist. Bei gleichzeitigem Auftreten von Ansage- und Spracheingabe übersteigt dagegen das Pulsmaß P die Summe aus Grundmaß G und Schwellenwert OF, und die Detektoreinrichtung 16 gibt das Detektorsignal Dt mit dem Logikwert 1 aus, wie ebenfalls in Fig. 12 gezeigt ist. Ein Vergleich der Fig. 7, 8 und 12 zeigt, daß die Detektoreinrichtung 16 ein gleichzeitiges Auftreten von Ansage- und Spracheingabe zuverlässig und mit vernachlässigbarer Verzögerung erfaßt.

**Patentansprüche**

1. Verfahren zum Erkennen einer Spracheingabe während einer Ansage, insbesondere anzuwenden auf ein sprachgesteuertes Ansagesystem (10), bei dem ein digitales Ansagesignal (An) und ein digitales Spracheingabesignal (Sp) über eine vorgegebene Mittelungsdauer gemittelt werden, für Zeitfenster vorbestimmter Länge Signaldifferenzen Elog von gemitteltem Spracheingabesignal (<Sp>) und gemitteltem Ansagesignal (<An>) ermittelt werden, die Signaldifferenzen Elog aufeinanderfolgender Zeitfenster einem ersten digitalen Filter (32) zugeführt werden, das unter Berücksichtigung einer ersten Adaptionsfunktion (30) ein Pulsmaß P ermittelt, welches neben einem Basisanteil einen Änderungsanteil an der Signaldifferenz Elog eines Zeitfensters enthält, die Signaldifferenzen (Elog) aufeinanderfolgender Zeitfenster weiterhin einem zweiten digitalen Filter (34) zugeführt werden, das unter Berücksichtigung einer zweiten Adaptionsfunktion (56) ein Grundmaß G ermittelt, welches im wesentlichen einen Basisanteil an der Signaldifferenz Elog eines Zeitfensters wiedergibt, und bei dem ein Detektorsignal (Dt) für das gleichzeitige Auftreten der Ansage und der Spracheingabe erzeugt wird, wenn das Pulsmaß P größer als das Grundmaß G plus einem vorgegebenen Schwellenwert OF ist.

2. Verfahren nach Anspruch 1, **dadurch gekennzeichnet, daß** die Absolutwerte des Ansagesignals und des Spracheingabesignals gemittelt werden.

3. Verfahren nach Anspruch 1 oder 2, **dadurch gekennzeichnet, daß** die Quadrate der Werte des Ansagesignals und des Spracheingabesignals gemittelt werden.

4. Verfahren nach einem der Ansprüche 1 bis 3, **dadurch gekennzeichnet, daß** als Signaldifferenz Elog die Differenz des Logarithmus des gemittelten Spracheingabesignals (<Sp>) und des Logarithmus des gemittelten Ansagesignals (<An>) verwendet wird.

5. Verfahren nach einem der vorhergehenden Ansprüche, **dadurch gekennzeichnet, daß** die Signaldifferenz Elog, welche durch das erste digitale Filter (32) verarbeitet wird, einem ersten und einem zweiten Verarbeitungszweig des ersten digitalen Filters (32) zugeführt wird, daß der erste Verarbeitungszweig in Reihe geschaltet ein erstes Additionsglied (38), ein Multiplikationsglied (40) und ein zweites Additionsglied (42) hat, welches das Pulsmaß P ausgibt, daß das Pulsmaß P mit einer Verzögerung (T) mindestens der Dauer eines Zeitfensters zurückgeführt und beim zweiten Additionsglied (42) addiert und beim ersten Additionsglied (38) subtrahiert wird, daß der zweite Verarbeitungszweig in Reihe geschaltet ein Additionsglied (46) und ein Adaptionsglied (48) hat, daß am Additionsglied (46) das verzögerte Pulsmaß P subtrahiert und als Ergebnis eine erste Hilfsgröße D1 ermittelt wird, daß in dem Adaptionsglied (48) aus der ersten Hilfsgröße (D1) eine erste Adaptionsgröße M1 gemäß der vorgegebenen ersten Adaptionsfunktion (50) ermittelt wird, und daß diese Adaptionsgröße M1 im ersten Verarbeitungszweig am Multiplikationsglied (40) als Multiplikator verwendet wird.

6. Verfahren nach Anspruch 5, **dadurch gekennzeichnet, daß** die erste Adaptionsfunktion (50) eine Beziehung zwischen der ersten Adaptionsgröße M1 und der ersten Hilfsgröße D1 definiert, die durch eine zur Null-Achse symmetrische, wannenförmige Kennlinie charakterisiert ist.

7. Verfahren nach Anspruch 6, **dadurch gekennzeichnet, daß** die erste Adaptionsfunktion durch eine Rechteckfunktion (52) angenähert wird.

8. Verfahren nach Anspruch 7, **dadurch gekennzeichnet, daß** für Betragswerte der ersten Hilfsgröße D1 kleiner als ein vorbestimmter Amplitudenwert (s) die erste Adaptionsgröße M1 einen Minimalwert ($M1_{min}$) und sonst einen Maximalwert ($M2_{max}$) annimmt.

9. Verfahren nach Anspruch 8, **dadurch gekennzeichnet, daß** der Minimalwert ($M1_{min}$) der ersten Adaptionsgröße M1 etwa 1/32 und der Maximalwert etwa 1/2 ist.

10. Verfahren nach einem der vorhergehenden Ansprüche, **dadurch gekennzeichnet, daß** die Signaldifferenz Elog, welche durch das zweite digitale Filter (34) verarbeitet wird, einem ersten und einem zweiten Verarbeitungszweig des zweiten digitalen Filters (34) zugeführt wird, daß der erste Verarbeitungszweig in Reihe geschaltet ein erstes Additionsglied (38), ein Multiplikationsglied (40), ein zweites Additionsglied (42) und ein drittes Additionsglied (54) hat, welches das Grundmaß G plus dem vorgegebenen Schwellenwert OF ausgibt,

daß das Grundmaß G mit einer Verzögerung (T) mindestens der Dauer eines Zeitfensters zurückgeführt und beim zweiten Additionsglied (42) addiert und beim ersten Additionsglied (38) subtrahiert wird,

daß der zweite Verarbeitungszweig in Reihe geschaltet ein Additionsglied (46) und ein Adaptionsglied (48) hat,

daß am Additionsglied (46) das verzögerte Grundmaß G subtrahiert und als Ergebnis eine zweite Hilfsgröße D2 ermittelt wird,

daß in dem Adaptionsglied (48) aus der zweiten Hilfsgröße D2 eine zweite Adaptionsgröße M2 gemäß der vorgegebenen zweiten Adaptionsfunktion (56) ermittelt wird

und daß diese Adaptionsgröße M2 im ersten Verarbeitungszweig am Multiplikationsglied (40) als Multiplikator verwendet wird.

11. Verfahren nach Anspruch 10, **dadurch gekennzeichnet, daß** die zweite Adaptionsfunktion (56) eine Beziehung zwischen der zweiten Adaptionsgröße M2 und der zweiten Hilfsgröße D2 definiert, welche durch eine im wesentlichen stufenförmige Kennlinie charakterisiert ist, die innerhalb eines überwiegend aus negativen Werten bestehenden Bereichs (II) der zweiten Hilfsgröße D2 von einem höheren Niveau auf ein niedrigeres Niveau abfällt.

12. Verfahren nach Anspruch 11, **dadurch gekennzeichnet, daß** die zweite Adaptionsfunktion (56) durch eine Stufenfunktion (58) angenähert ist.

13. Verfahren nach Anspruch 12, **dadurch gekennzeichnet, daß** die zweite Adaptionsgröße M2 für Werte der Hilfsgröße D2 kleiner als ein erster vorgegebener negativer Hilfswert (S1) einen minimalen Wert ($M2_{min}$), für Werte der Hilfsgröße D2 größer gleich dem ersten Hilfswert (S1) und kleiner gleich einem zweiten vorgegebenen positiven Hilfswert (S2) einen Zwischenwert ($M2_{zw}$) und für Werte der Hilfsgröße D2 größer als der zweite Hilfswert (S2) einen maximalen Wert ($M2_{max}$) annimmt.

14. Verfahren nach einem der vorhergehenden Ansprüche, **dadurch gekennzeichnet, daß** der Schwellwert OF zwischen 6 dB und 10 dB liegt.

15. Einrichtung (16) zum Durchführen des Verfahrens nach einem der vorhergehenden Ansprüche, **gekennzeichnet durch**

ein Ansagemittelungsglied (26), **durch** das ein digitales Ansagesignal (An) über eine vorgegebene Mittelungsdauer gemittelt wird,

ein Eingabemittelungsglied (28), **durch** das ein digitales Spracheingabesignal (Sp) über eine vorgegebene Mittelungsdauer gemittelt wird,

ein Additionsglied (30), dessen Eingänge mit dem Ansagemittelungsglied (26) und dem Eingabemittelungsglied (28) verbunden sind und das für Zeitfenster vorbestimmter Länge Signaldifferenzen Elog von gemitteltem Spracheingabesignal (<Sp>) und gemitteltem Ansagesignal (<An>) ermittelt,

ein erstes digitales Filter (32), dem die Signaldifferenzen Elog aufeinanderfolgender Zeitfenster zugeführt werden und das unter Berücksichtigung einer ersten Adaptionsfunktion (30) ein Pulsmaß P ermittelt, welches neben einem Basisanteil einen Änderungsanteil an der Signaldifferenz Elog eines Zeitfensters enthält,

ein zweites digitales Filter (34), dem die Signalverhältnisse Elog aufeinanderfolgender Zeitfenster zugeführt

werden und das unter Berücksichtigung einer zweiten Adaptionsfunktion (56) ein Grundmaß G ermittelt, welches im wesentlichen einen Basisanteil an der Signaldifferenz Elog eines Zeitfensters wiedergibt,

und eine Auswerteeinheit (36), die ein Detektorsignal (Dt) für das gleichzeitige Auftreten der Ansage und der Spracheingabe erzeugt, wenn das Pulsmaß P größer als das Grundmaß G plus einem vorgegebenen Schwellenwert OF ist.

16. Einrichtung (16) nach Anspruch 15, **dadurch gekennzeichnet, daß** das erste digitale Filter (32) einen ersten und einen zweiten Verarbeitungszweig hat,

daß der erste Verarbeitungszweig in Reihe geschaltet ein erstes Additionsglied (38), ein Multiplikationsglied (40) und ein zweites Additionsglied (42) und zudem ein dem zweiten Additionsglied (42) nachfolgendes Verzögerungsglied (44) hat, dessen Ausgang mit dem Eingang des ersten Additionsgliedes (38) und dem Eingang des zweiten Additionsgliedes (42) verbunden ist, und

daß der zweite Verarbeitungszweig in Reihe geschaltet ein Additionsglied (46), dessen Eingang mit dem Ausgang des Verzögerungsgliedes (44) verbunden ist, und ein Adaptionsglied (48) hat, dessen Ausgang mit dem Eingang des Multiplikationsgliedes (40) verbunden ist.

17. Einrichtung (16) nach Anspruch 15 oder 16, **dadurch gekennzeichnet, daß** das zweite digitale Filter (34) einen ersten und einen zweiten Verarbeitungszweig hat,

daß der erste Verarbeitungszweig in Reihe geschaltet ein erste Additionsglied (38), ein Multiplikationsglied (40), ein zweites Additionsglied (42) und ein drittes Additionsglied (54) und zudem ein Verzögerungsglied (44) hat, dessen Ausgang mit dem Eingang des ersten Additionsgliedes (38) und dem Eingang des zweiten Additionsgliedes (42) verbunden ist,

und daß der zweite Verarbeitungszweig in Reihe geschaltet ein Additionsglied (46), dessen Eingang mit dem Ausgang des Verzögerungsgliedes (44) verbunden ist, und

ein Adaptionsglied (48) hat, dessen Ausgang mit dem Eingang des Multiplikationsgliedes (40) verbunden ist.

## Claims

1. Method for recognizing a speech input during an announcement, to be applied in particular to a speech-controlled announcement system (10),

   in which a digital announcement signal (An) and a digital speech input signal (Sp) are averaged over a predefined averaging period,

   signal differences Elog of an averaged speech input signal (<Sp>) and averaged announcement signal (<An>) are determined for time windows of a predetermined length,

   the signal differences Elog of successive time windows are fed to a first digital filter (32) which, taking into account a first adaptation function (30), determines a pulse quantity P which contains both a basic component and a change component of the signal difference Elog of a time window,

   the signal differences (Elog) of successive time windows are also fed to a second digital filter (34) which, taking into account a second adaptation function (56), determines a basic quantity (G) which essentially represents a basic component of the signal difference Elog of the time window,

   and in which a detector signal (Dt) is denoted for the simultaneous occurrence of the announcement and the speech input if the pulse quantity P is greater than the basic quantity G plus a predefined threshold value OF.

2. Method according to Claim 1, **characterized in that** the absolute values of the announcement signal and of the speech input signal are averaged.

3. Method according to Claim 1 or 2, **characterized in that** the squares of the values of the announcement signal and of the speech input signal are averaged.

4. Method according to one of Claims 1 to 3, **characterized in that** the difference between the logarithm of the averaged speech input signal (<Sp>) and the logarithm of the averaged announcement signal (<An>) is used as the signal difference Elog.

5. Method according to one of the preceding claims, **characterized in that** the signal difference Elog which is processed by the first digital filter (32) is fed to a first and a second processing path of the first digital filter (32),

   **in that** the first processing path has, connected in series, a first adder element (38), a multiplier element (40) and a second adder element (42) which outputs the pulsed quantity P,

   **in that** the pulsed quantity P is fed back with a delay (T) of at least the duration of a time window and added at the second adder element (42) and subtracted at the first adder element (38),

   **in that** the second processing branch has, connected in series, an adder element (46) and an adaptation element (48),

   **in that** the delayed pulse quantity P is subtracted at the adder element (46) and a first auxiliary variable D1 is determined as a result,

   **in that** a first adaptation variable M1 is determined from the first auxiliary variable (D1) in the adaptation element (48) in accordance with the predefined, first adaptation function (50),

   and **in that** this adaptation variable M1 is used as a multiplier at the multiplier element (40) in the first processing branch.

6. Method according to Claim 5, **characterized in that** the first adaptation function (50) defines a relationship between the first adaptation variable M1 and the first auxiliary variable D1 which is **characterized by** a trough-shaped characteristic curve which is symmetrical with respect to the zero axis.

7. The method as claimed in Claim 6, **characterized in that** the first adaptation function is approximated by the square-wave function (52).

8. The method as claimed in Claim 7, **characterized in that** the first adaptation variable M1 assumes a minimum value ($M1_{min}$) for variable values of the first auxiliary variable D1 which are less than a predetermined amplitude value (s), and otherwise a maximum value ($M2_{max}$).

9. Method according to Claim 8, **characterized in that** the minimum value ($M1_{min}$) of the first adaptation variable M1 is approximately 1/32, and the maximum value approximately 1/2.

10. Method according to one of the preceding claims, **characterized in that** the signal difference Elog which is processed by the second digital filter (34) is fed to a first and a second processing branch of the second digital filter (34),

    **in that** the first processing branch has, connected in series, a first adder element (38), a multiplier element (40), a second adder element (42) and a third adder element (54) which output the basic quantity G plus the predefined threshold value OF, **in that** the basic quantity G is fed back with a delay (T) of at least the duration of a time window and added at the second adder element (42) and subtracted at the first adder element (38),

**in that** the second processing branch has, connected in series, an adder element (46) and an adaptation element (48),

**in that** the delayed basic quantity G is subtracted at the adder element (46) and the second auxiliary variable D2 is determined as a result,

**in that** a second adaptation variable M2 is determined in the adaptation element (48) from the second auxiliary variable D2, according to the predefined second adaptation function (56),

and **in that** this adaptation variable M2 is used as a multiplier at the multiplier element (40) in the first processing branch.

11. Method according to Claim 10, **characterized in that** the second adaptation function (56) defines a relationship between the second adaptation variable M2 and the second auxiliary variable D2 which is **characterized by** an essentially step-shaped characteristic curve which drops from a relatively high level to a relatively low level within a range (II) of the second auxiliary variable D2 which is predominately composed of negative values.

12. Method according to Claim 11, **characterized in that** the second adaptation function (56) is approximated by a step function (58).

13. Method according to Claim 12, **characterized in that** the second adaptation variable M2 assumes a minimum value ($M2_{min}$) for values of the auxiliary variable D2 which are less than a first predefined negative auxiliary value (S1), an intermediate value ($M2_{zw}$) for values of the auxiliary variable D2 which are greater than or equal to the first auxiliary value (S1) and smaller than or equal to a second predefined positive auxiliary value (S2), and a maximum value ($M2_{max}$) for values of the auxiliary variable D2 which are greater than the second auxiliary variable (S2).

14. Method according to one of the preceding claims, **characterized in that** the threshold value OF is between 6 dB and 10 dB.

15. Device (16) for carrying out the method according to one of the preceding claims, **characterized by** an announcement averaging element (26) which averages a digital announcement signal (An) over a predefined averaging period, an input averaging element (28) which averages a digital speech input signal (Sp) over a predefined averaging period, an adder element (30) whose inputs are connected to the announcement averaging element (26) and to the input averaging element (28) and which determines signal differences Elog of the averaged speech input signal (<Sp>) and averaged announcement signal (<An>) for time windows of a predefined length, a first digital filter (32) to which the signal differences Elog of successive time windows are fed and which, taking into account a first adaptation function (30), determines a pulse quantity P which contains both a basic component and a change component of the signal difference Elog of a time window, a second digital filter (34) to which the signal conditions Elog of successive time windows are fed and which, taking into account a second adaptation function (56), determines a basic quantity G which presents essentially a basic component of the signal difference Elog of a time window, and an evaluation unit (36) which generates a detector signal (Dt) for the simultaneous occurrence of the announcement and the speech input if the pulse quantity P is greater than the basic quantity G plus a predefined threshold value OF.

16. Device (16) according to Claim 15, **characterized in that** the first digital filter (32) has a first and a second processing branch,

**in that** the first processing branch has, connected in series, a first adder element (38), a multiplier element (40) and a second adder element (42) and, in addition, a delay element (44) which is downstream of the second adder element (42) and whose output is connected to the input of the first adder element (38) and to the input of the second adder element (42), and

**in that** the second processing branch has, connected in series, an adder element (46) whose input is connected to the output of the delay element (44), and an adaptation element (48) whose output is connected to the input of the multiplier element (40).

17. Device (16) according to Claim 15 or 16, **characterized in that** the second digital filter (34) has a first and a second processing branch,

**in that** the first processing branch has, connected in series, a first adder element (38), a multiplier element (40), a second adder element (42) and a third adder element (54) and, in addition, a delay element (44) whose output is connected to the input of the first adder element (38) and to the input of the second adder element (42),

and **in that** the second processing branch has, connected in series, an adder element (46) whose input is connected to the output of the delay element (44), and an adaptation element (48) whose output is connected to the input of the multiplier element (40).

## Revendications

1. Procédé pour détecter une entrée de parole pendant une annonce vocale et destiné, notamment, à un système d'annonces vocales (10) contrôlé par la parole,
dans lequel on fait la moyenne, pendant une période de temps donnée, du signal numérique d'annonce vocale (An) et du signal d'entrée de parole (Sp), on détermine, pour des fenêtres de temps de longueur donnée, des différences entre les signaux Elog entre la moyenne du signal d'entrée de parole (<Sp>) et la moyenne du signal d'annonce vocale (<An>),
les différences entre les signaux Elog de fenêtres de temps qui se succèdent, sont appliquées à un premier filtre numérique (32), lequel détermine, en tenant compte d'une première fonction d'adaptation (30) une mesure d'impulsion P, qui comprend, en plus d'une composante de base, une composante variable de la différence entre les signaux Elog, les différences entre les signaux Elog de fenêtres de temps qui se succèdent, sont appliquées à un deuxième filtre numérique (34), lequel détermine, en tenant compte d'une deuxième fonction d'adaptation (56) une mesure de fond G, qui reproduit, pour l'essentiel, une composante de base de la différence entre les signaux Elog.
et dans lequel on génère un signal de détecteur (Dt) pour l'apparition simultanée de l'annonce vocale et de l'entrée de parole, lorsque la mesure d'impulsion P est supérieure à la mesure de fond G augmentée d'une valeur seuil donnée OF.

2. Procédé selon la revendication 1 **caractérisé par le fait qu'**on calcule la moyenne des valeurs absolues du signal de l'annonce vocale et du signal d'entrée de la parole.

3. Procédé selon la revendication 1 ou 2 **caractérisé par le fait qu'**on calcule la moyenne des carrés des valeurs du signal de l'annonce vocale et du signal d'entrée de la parole.

4. Procédé selon l'une des revendications 1 à 3 **caractérisé par le fait qu'**on utilise, comme différence entre les signaux Elog, la différence entre le logarithme de la moyenne du signal d'entrée de parole (<Sp>) et le logarithme de la moyenne du signal d'annonce vocale (<An>).

5. Procédé selon l'une des revendications précédentes **caractérisé par le fait que** la différence entre les signaux Elog, qui est traitée par le premier filtre numérique (32), est appliquée à une première et à une deuxième branche de traitement du premier filtre numérique (32),
que la première branche de traitement a, montés en série, un premier élément additionneur (38), un élément multiplicateur (40) et un deuxième élément additionneur (42), qui délivre la mesure d'impulsion P,
que la mesure d'impulsion P est réinjectée avec un retard (T) d'au moins la longueur d'une fenêtre de temps et additionnée dans le deuxième élément additionneur (42) et soustraite dans le premier élément additionneur (38),
que la deuxième branche de traitement a, montés en série, un élément additionneur (46) et un élément d'adaptation (48),
que la mesure d'impulsion P retardée est soustraite dans l'élément additionneur (46) et, en tant que résultat, une première grandeur auxiliaire D1 est déterminée,
que, dans l'élément d'adaptation (48), on détermine, à partir de la première grandeur auxiliaire D1, une première grandeur d'adaptation M1 conformément à la première fonction d'adaptation donnée (50)
et que cette grandeur d'adaptation M1 est utilisée, dans la première branche de traitement, comme multiplicateur sur l'élément multiplicateur (40).

6. Procédé selon la revendication 5 **caractérisé par le fait que** la première fonction d'adaptation (50) définit une relation entre la première grandeur d'adaptation M1 et la première grandeur auxiliaire D1, qui est spécifiée par une courbe caractéristique en forme de cuve symétrique par rapport à l'axe zéro.

7. Procédé selon la revendication 6 **caractérisé par le fait que** la première fonction d'adaptation est approchée par une fonction rectangulaire (52).

8. Procédé selon la revendication 7 **caractérisé par le fait que**, pour des valeurs de la première grandeur auxiliaire D1 inférieures à une amplitude prédéterminée (s), la première grandeur d'adaptation M1 prend une valeur minimum ($M1_{min}$) et, pour d'autres valeurs, une valeur maximum ($M2_{max}$).

9. Procédé selon la revendication 8 **caractérisé par le fait que** la valeur minimum ($M1_{min}$) de la première grandeur d'adaptation M1 s'élève à environ 1/32 et la valeur maximum ($M2_{max}$) à environ 1/2.

10. Procédé selon l'une des revendications précédentes **caractérisé par le fait que** la différence entre les signaux Elog, qui est traitée par le deuxième filtre numérique (34), est appliquée à une première et à une deuxième branche de traitement du deuxième filtre numérique (34),
que la première branche de traitement a, montés en série, un premier élément additionneur (38), un élément multiplicateur (40), un deuxième élément additionneur (42) et un troisième élément additionneur (54), qui donne la mesure de fond G augmentée de la valeur seuil donnée OF,

que la mesure de fond G est réinjectée avec un retard (T) d'au moins la longueur d'une fenêtre de temps et additionnée dans le deuxième élément additionneur (42) et soustraite dans le premier élément additionneur (38),

que la deuxième branche de traitement a, montés en série, un élément additionneur (46) et un élément d'adaptation (48),

que la mesure de fond G retardée est soustraite dans l'élément additionneur (46) et, en tant que résultat, une deuxième grandeur auxiliaire D2 est déterminée,

que, dans l'élément d'adaptation (48), on détermine, à partir de la deuxième grandeur auxiliaire D2, une deuxième grandeur d'adaptation M2 conformément à la deuxième fonction d'adaptation donnée (56)

et que cette grandeur d'adaptation M2 est utilisée, dans la première branche de traitement, comme multiplicateur sur l'élément multiplicateur (40).

11. Procédé selon la revendication 10 **caractérisé par le fait que** la deuxième fonction d'adaptation (56) définit une relation entre la deuxième grandeur d'adaptation M2 et la deuxième grandeur auxiliaire D2, laquelle est spécifiée par une courbe caractéristique essentiellement en forme d'escalier qui, à l'intérieur d'une plage (II) de la deuxième grandeur auxiliaire D2, composée surtout de valeurs négatives, tombe d'un niveau élevé à un niveau plus faible.

12. Procédé selon la revendication 11 **caractérisé par le fait que** la deuxième fonction d'adaptation (56) est approchée par une fonction en escalier (58).

13. Procédé selon la revendication 12 **caractérisé par le fait que** la deuxième grandeur d'adaptation M2 prend, pour des valeurs de la grandeur auxiliaire D2 inférieures à une première valeur auxiliaire négative donnée (S1), une valeur minimum ($M2_{min}$), pour des valeurs de la grandeur auxiliaire D2 supérieures ou égales à la première valeur auxiliaire (S1) et inférieures ou égales à une deuxième valeur auxiliaire positive donnée (S2), une valeur intermédiaire ($M2_{zw}$) et, pour des valeurs de la grandeur auxiliaire D2 supérieures à la deuxième valeur auxiliaire (S2), une valeur maximum ($M2_{max}$).

14. Procédé selon l'une des revendications précédentes **caractérisé par le fait que** la valeur seuil OF se trouve entre 6 dB et 10 dB.

15. Dispositif (16) destiné à exécuter le procédé selon l'une des revendications précédentes **caractérisé par**

un élément pour le calcul de la moyenne de l'annonce vocale (26), grâce auquel est calculée, sur une période de temps donnée, la moyenne du signal numérique d'annonce vocale (An),

un élément pour le calcul de la moyenne de l'entrée de parole (28), grâce auquel est calculée, sur une période de temps donnée, la moyenne du signal d'entrée de parole (Sp),

un élément additionneur (30), dont les entrées sont reliées à l'élément pour le calcul de la moyenne de l'annonce vocale (26) et à l'élément pour le calcul de la moyenne de l'entrée de parole (28) et qui détermine, pour des fenêtres de temps d'une longueur donnée, des différences entre signaux Elog, entre la moyenne du signal d'entrée de parole (<Sp>) et la moyenne du signal d'annonce vocale (<An>),

un premier filtre numérique (32), auquel sont appliquées les différences entre signaux Elog de fenêtres de temps qui se succèdent, et qui détermine, en tenant compte d'une première fonction d'adaptation (30), une mesure d'impulsion P, laquelle comporte, en plus d'une composante de base, une composante variable de la différence entre signaux Elog d'une fenêtre de temps,

un deuxième filtre numérique (34), auquel sont appliquées les différences entre signaux Elog de fenêtres de temps qui se succèdent, et qui détermine, en tenant compte d'une deuxième fonction d'adaptation (56), une mesure de fond G, qui reproduit, pour l'essentiel, une composante de base de la différence entre les signaux Elog d'une fenêtre de temps,

et une unité d'évaluation (36), qui génère un signal de détecteur (Dt) pour l'apparition simultanée de l'annonce vocale et de l'entrée de parole, lorsque la mesure d'impulsion P est supérieure à la mesure de fond G augmentée d'une valeur seuil donnée OF.

16. Dispositif (16) selon la revendication 15 **caractérisé par le fait que** le premier filtre numérique (32) a une première et une deuxième branche de traitement,

que la première branche de traitement a, montés en série, un premier élément additionneur (38), un élément multiplicateur (40) et un deuxième élément additionneur (42) et, en outre, derrière le deuxième élément additionneur (42), un élément temporisateur (44), dont la sortie est reliée à l'entrée du premier élément additionneur (38) et à l'entrée du deuxième élément additionneur (42) et

que la deuxième branche de traitement a, montés en série, un élément additionneur (46), dont l'entrée est reliée à la sortie de l'élément temporisateur (44), et un élément d'adaptation (48), dont la sortie est reliée à l'entrée de l'élément multiplicateur (40).

17. Dispositif (16) selon la revendication 15 ou 16 **ca-**

**ractérisé par le fait que** le deuxième filtre numérique (34) a une première et une deuxième branche de traitement,

que la première branche de traitement a, montés en série, un premier élément additionneur (38), un élément multiplicateur (40), un deuxième élément additionneur (42) et un troisième élément additionneur (54) et, en outre, un élément temporisateur (44), dont la sortie est reliée à l'entrée du premier élément additionneur (38) et à l'entrée du deuxième élément additionneur (42) et

que la deuxième branche de traitement a, montés en série, un élément additionneur (46), dont l'entrée est reliée à la sortie de l'élément temporisateur (44), et

un élément d'adaptation (48), dont la sortie est reliée à l'entrée de l'élément multiplicateur (40).

## FIG 1

## FIG 2

**FIG 3**

32

38    M1    40    42

Elog

P

44

T

D1

Adaption    M1

46    48

**FIG 4**

M1

50

M1max

52

M1min

-10    S    S    10    D1

0

# FIG 5

# FIG 6

FIG 7

Ansage:"Siemens"

An

Zeit in Sekunden

FIG 8

Spracheingabe:"Mueller"

Sp

Zeit in Sekunden

EP 0 902 416 B1

FIG 9

**FIG 10**

**FIG 11**

EP 0 902 416 B1

**FIG 12**

Zeit in Sekunden